# EUROPÄISCHE PATENTSCHRIFT

(11) **EP 0 408 023 B1**
(45) Veröffentlichungstag und Bekanntmachung des Hinweises auf die Patenterteilung: **13.10.1993**
(21) Anmeldenummer: 90113310.8
(22) Anmeldetag: 12.07.1990
(51) Int. Cl.: H04N 1/10, H04N 7/14

(54) **Teilnehmergerät für Bildfernsprechen**
Subscriber device for videophone
Dispositif d'abonné pour vidéophone

(30) Priorität: 13.07.1989 DE 3923124
(43) Veröffentlichungstag der Anmeldung: 16.01.1991
(73) Patentinhaber: Alcatel SEL Aktiengesellschaft, D-70435 Stuttgart (DE)
(72) Erfinder: Deeg, Reinhard, D-7538 Keltern-2 (DE); Huzenlaub, Richard, D-7545 Höfen (DE)
(74) Vertreter: Pohl, Herbert, Dipl.-Ing.

(56) Entgegenhaltungen:
- EP-A- 0 320 787
- DE-A- 3 600 914

## Beschreibung

Die Erfindung geht von einem Teilnehmergerät gemäß dem Oberbegriff des Anspruchs 1 aus.

Durch die US-A-4 8 21 307 und die US-A-3 755 623 sind derartige Teilnehmergeräte bekannt. Je nach Ausführung sieht der jeweilige Teilnehmer durch einen schräggestellten achromatischen Lichtteiler oder halbdurchlässigen Spiegel die Bildwiedergabe auf dem Bildschirm der Wiedergabeeinrichtung, während gleichzeitig das Bild des Teilnehmers am Lichtteiler auf die Kamera projiziert wird, oder umgekehrt nimmt die Kamera den Teilnehmer durch den Lichtteiler auf, während dieser auf letzterem das Spiegelbild der Wiedergabeeinrichtung sieht. Sind Kamera und Wiedergabeeinrichtung so angeordnet, daß ihre optischen Achsen senkrecht aufeinander stehen, so bedarf es nur des Lichtteilers im Schnittpunkt dieser Achsen. Da diese Geräte eine relativ große Bauhöhe haben, werden besonders für Tischgeräte Ausführungen bevorzugt, bei denen Kamera und Wiedergabeeinrichtung so angebracht sind, daß ihre optischen Achsen parallel verlaufen. Das am Lichtteiler reflektierte Licht wird durch einen zusätzlichen, undurchlässigen Spiegel in die Parallele umgelenkt. Zum Einblenden von Gegenständen, z.B. Bildern, Schriftstücken oder dreidimensionalen Objekten, ist unterhalb der Spiegel, vorzugsweise außerhalb des Gerätegehäuses, eine Auflagefläche für den abzutastenden Gegenstand vorgesehedn. Die Auflagefläche bzw. der darauf befindliche Gegenstand wird für die Zeit der Abtastung durch eine speziell dafür vorgesehene Lichtquelle beleuchtet.

Die Aufgabe der Erfindung besteht darin, mit geringerem technischen Aufwand die Abtastung eines Gegenstandes mit einem Teilnehmergerät der vorgenannten Art zu ermöglichen.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß zur Abtastung eines Gegenstandes kein Eingriff in den Verlauf der Lichtwege des Teilnehmergerätes erforderlich ist und daß eine optimale Ausleuchtung des abzutastenden Gegenstandes gegeben ist, ohne daß eine gesonderte Beleuchtungseinrichtung benötigt wird.

Anhand mehrerer Ausführungsbeispiele wird die Erfindung in Verbindung mit den Zeichnungen nachfolgend näher erläutert. Es zeigt:
- Fig.1 und 2: ein erstes Ausführungsbeispiel eines Teilnehmergeräts gemäß der Erfindung in schematischer Darstellung.
- Fig.3: ein zweites Ausführungsbeispiel eines Teilnehmergeräts gemäß der Erfindung in schematischer Darstellung.
- Fig.4: ein drittes Ausführungsbeispiel eines Teilnehmergeräts gemäß der Erfindung in schematischer Darstellung.

Die vorstehend genannten Ausführungsbeispiele basieren auf einem im wesentlichen durch die DE-A- 37 43 026 bekannten Tischgerät eines Bildfernsprechers.

Wie die Zeichnungen erkennen lassen, besteht das Gerät aus einem Sockel 15, auf dem ein Bildschirmgerät 16 in Grenzen kippbar gelagert ist. Im Sockel 15 ist die zum Betrieb des Teilnehmergerätes erforderliche Steuer-, Speicher- und Leitungsanpassungselektronik untergebracht. Diese ist bei der Erfindung nur am Rande von Bedeutung, so daß eine eingehende Beschreibung zum Verständnis der Erfindung nicht erforderlich ist.

Im Gehäuse 1 des Bildschirmgerätes 16 ist eine Bildwiedergabeeinrichtung z.B. eine Bildröhre 2 mit frontseitigem Bildschirm 3 angeordnet. Die Bildwiedergabeeinrichtung kann auch ein Flachdisplay oder eine Video-Projektionseinrichtung sein. In Blickrichtung auf den Bildschirm 3 hat das Gehäuse 1 ein Sichtfenster 4. Im Raum zwischen dem Sichtfenster 4 und dem Bildschirm 3 ist ein achromatischer Lichtteiler 5 im Winkel von 45° schräg angeordnet. Der Lichtteiler 5 hat vorzugsweise ein Transmissions/Reflexionsverhältnis von 50/50 %. Vorzugsweise parallel zur Bildröhre 2 ist eine Videokamera 7 angeordnet. Auf der der Videokamera 7 abgewandten Seite des Lichtteilers 5 ist unter einem vorzugsweise gleichen Winkel wie der Lichtteiler 5 ein Umlenkspiegel 6 angeordnet, durch den das am Lichtteiler 5 reflektierte Abbild eines vor dem Gerät sitzenden Teilnehmers 17 auf die Videokamera 7 projiziert wird. Aufgrund der 50 %igen Transmission sieht der Teilnehmer 17 gleichzeitig das auf dem Bildschirm 3 abgebildete Bild, vorzugsweise den Teilnehmer am anderen Ort.

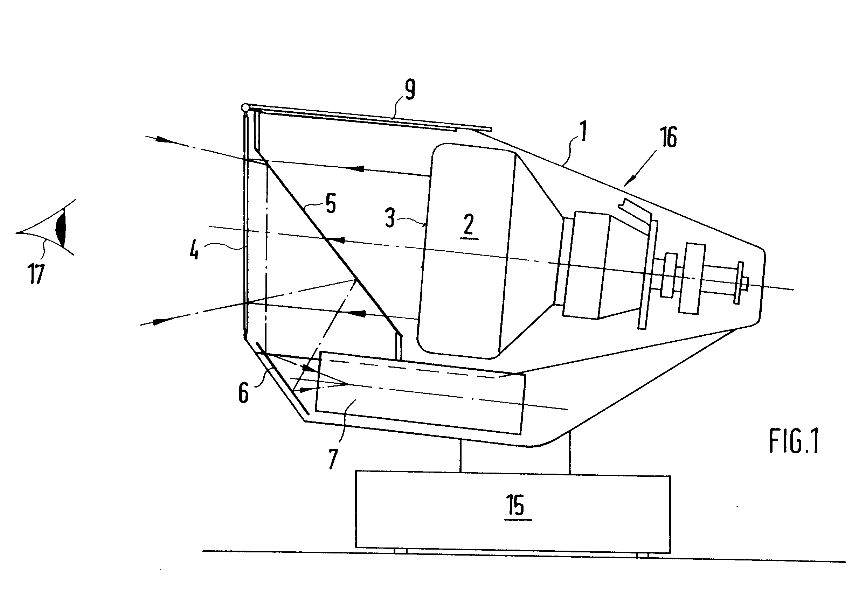

Die Ausführungen der Fig. 1 bis 4 ermöglichen zusätzlich das Aufzeichnen und die Wiedergabe eines Gegenstandes, z.B. eines Bildes, eines Dokumentes oder eines dreidimensionalen Objektes, auf dem eigenen und/oder auf dem Bildschirm des Teilnehmers am anderen Ort.

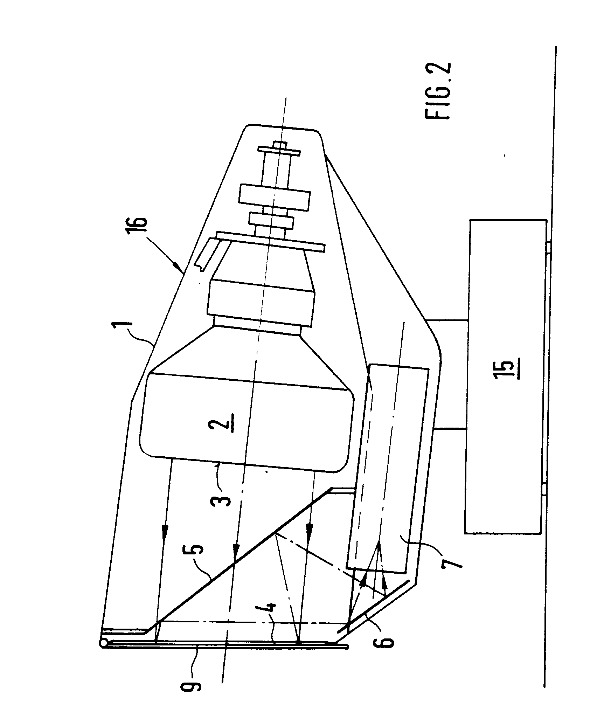

Fig.1 und Fig.2 zeigen ein erstes Ausführungsbeispiel eines Teilnehmergerätes für Bildfernsprechen in schematischer Darstellung. Das Bildschirmgerät 16 hat eine Abdeckklappe 9, die oberhalb und parallel zum Sichtfenster 4 schwenkbar gelagert ist. In Fig.1 liegt die Klappe 9 nach rückwärts gelegt auf der Deckfläche des Gehäuses 1. In diesem Zustand ist der Kommunikationsbetrieb zwischen zwei Teilnehmern auf Bild- und Tonbasis möglich.

Zum Abtasten bzw. Aufzeichnen eines zweidimensionalen Gegenstandes, z.B. ein Bild- oder Schriftdokument, wird letzteres auf der vorzugsweise mattschwarzen Oberfläche der Abdeckklappe 9 befestigt. Markierungen zeigen den maximalen Abtastbereich an. Letzterer ist im wesentlichen durch die Abmessungen des Bildschirms 3 bzw. des Sichtfensters 4 bestimmt. Nach dem Befestigen des Dokuments (nicht gezeigt) wird die Abdeckklappe 9 vor das Sichtfenster 4 geklappt, wie Fig.2 zeigt. Der Blickkontakt zum Bildschirm 3 ist damit unterbrochen, so daß er während der Zeit der Abdeckung des Sichtfensters 4 keine Wiedergabefunktion erfüllen muß. Er kann daher während dieser Zeit eine andere Funktion ausüben, nämlich die einer Lichtquelle zum Beleuchten des abzutastenden Dokumentes.

Über eine nicht gezeigte Eingabetastatur wird die Steuerelektronik im Sockel 15 signalisiert, daß die Abtastung eines Gegenstandes zu erfolgen hat. Diese veranlaßt, daß der Bildschirm 3 auf maximale Helligkeit gesteuert wird und die Tiefenschärfe der Videokamera 7 auf die Ebene des abzutastenden Dokumentes zwischen der Sichtscheibe 4 und der Klappe 9 eingestellt wird.

Durch den hellgesteuerten Bildschirm 3 wird das Dokument mit einem durch den Lichtteiler 5 bedingten Verlust an Lichtleistung beleuchtet. Das vom Dokument reflektierte Licht wird durch den Lichtteiler 5 entsprechend dem Reflexions/Transmissionsverhältnis auf dem Umlenkspiegel 6 und von dort auf die Videokamera 7 projiziert. Die während der Abtastung am Ausgang der Videokamera 7 auftretenden Analogsignale werden A/D-gewandelt und bildzeilenweise organisiert in einen Vollbildspeicher eingelesen. Aus diesem kann die eingespeicherte Information nach der Rückkehr zum Kommunikationsbetrieb zur Wiedergabe auf dem eigenen und/oder dem Bildschirm am fernen Ort oder zum Hardcopy-Ausdruck abgerufen werden.

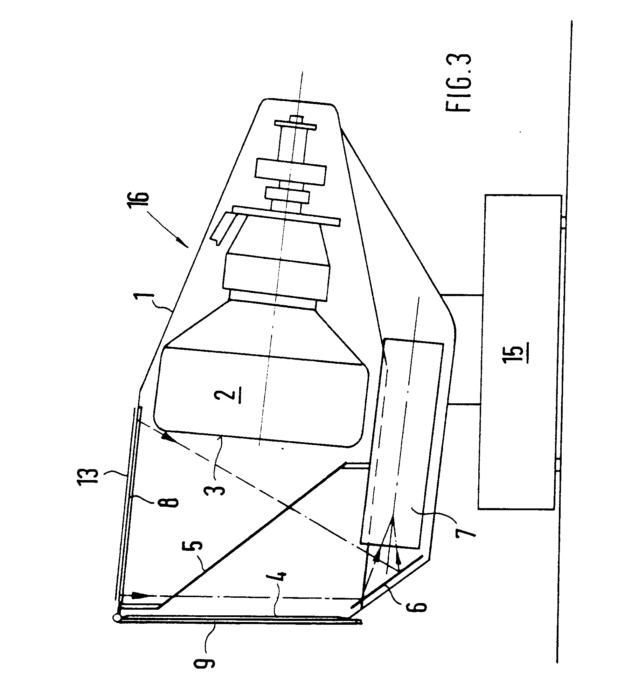

Fig.3 zeigt ein zweites Ausführungsbeispiel eines Teilnehmergerätes für Bildfernsprechen in schematischer Darstellung. Diese Ausführung unterscheidet sich von dem zuvor beschriebenen Gerät nur dadurch, daß in die Deckfläche des Gehäuses 1 eine Glasplatte 8 eingelassen ist, die etwa die Abmessungen wie das Sichtfenster 4 hat, und die mit einer Längskante parallel zueinander verlaufen. Zwischen dem Fenster 4 und der Platte 8 ist die Abdeckklappe 9 schwenkbar gelagert. Bei dieser Ausführung ist die Klappe 9 auf beiden Seiten mattschwarz.

Während des Kommunikationsbetriebes ist die Klappe 9 wie bei Fig.1 nach oben umgelegt und deckt die Glasplatte 8 lichtdicht ab. Zum Abtasten eines Dokuments 13 ist die Klappe 9 vor das Sichtfenster 4 geklappt und deckt nunmehr dieses lichtdicht ab. Die Glasplatte 8 hat Markierungen, die den maximalen Abtastbereich umgrenzen. Auf diesen ist das Dokument 13 ausgerichtet. Ist das Dokument größer als der Abtastbereich, so ist nur eine ausschnittweise Abtastung möglich. Im Bedarfsfall muß eine Abtastung in mehreren Zyklen erfolgen.

Bei der Ausführung gemäß Fig.3 wird das vom hellgesteuerten Bildschirm 3 abgestrahlte Licht am Lichtteiler 5 entsprechend dem Reflexions/Transmissionsverhältnis nach oben gegen das auf der Glasplatte 8 liegende Dokument 13 reflektiert. Das vom Dokument 13 zurückgeworfene Licht gelangt unter Dämpfung durch den Lichtteiler 5 auf den Umlenkspiegel 6 und von dort auf die Videokamera 7. Die Abtastung und Einspeicherung erfolgt wie vorbeschrieben. Im vorliegenden Fall wird das Abbild des Dokumentes 13 nur einmal gespiegelt. Eine Wiedergabe der im Vollbildspeicher bildzeilenorganisiert abgelegten Signale in der Reihenfolge der Eingabe würde eine zeilenverkehrte Wiedergabe ergeben. Aus diesem Grund wird die an sich notwendige zweite Spiegelung durch ein Auslesen der Bildzeilensignale in umgekehrter Reihenfolge simuliert.

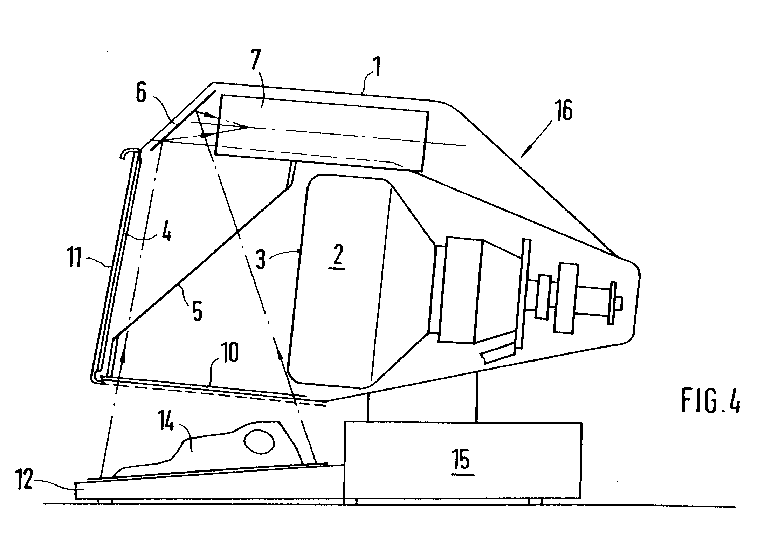

Fig.4 zeigt ein drittes Ausführungsbeispiel eines Teilnehmergerätes für Bildfernsprechen. Bei dieser Ausführung ist das Bildschirmgerät 16 gegenüber der Lage in Fig.3 um 180° um die Bildröhrenachse gedreht. Die Videokamera 7 befindet sich damit oberhalb der Bildröhre 2. In die Bodenfläche des Gehäuses 1 ist eine Glasplatte 10 eingelassen. Unterhalb der Glasplatte 10 ist eine Auflage 12 für den jeweils abzutastenden Gegenstand angeordnet. Diese Ausführung läßt auch ein Abtasten von dreidimensionalen Objekten 14 zu. Auch hier ist eine Abdeckplatte 11 vorgesehen, die ein wahlweises lichtdichtes Abdecken des Sichtfensters 4 oder der Glasplatte 10 gestattet. Die Ausleuchtung der Auflage 12 bzw. des darauf befindlichen Gegenstandes, z.B. ein Objekt 14 und dessen Abtastung und Bildverarbeitung erfolgt in der gleichen Weise wie zu Fig.3 beschrieben.

## Patentansprüche

1. Teilnehmergerät für Bildfernsprechen, bei dem in einem Gehäuse eine Bildwiedergabeeinrichtung, ein zwischen dem Bildschirm der Wiedergabeeinrichtung und einem Sichtfenster schräg angeordneter achromatischer Lichtteiler und eine Videokamera angeordnet sind, und mit dem wahlweise ein zwei- oder dreidimensionaler Gegenstand abtastbar ist,
**dadurch gekennzeichnet,**
daß zum Abtasten eines Gegenstandes (Dokument 13, Objekt 14) die Bildwiedergabeeinrichtung zum Zwecke der Beleuchtung des Gegenstandes hellgesteuert und der Gegenstand (13,14) so angeordnet ist, daß er einerseits durch das vom Bildschirm (3) abgestrahlte Licht ausgeleuchtet ist und andererseits durch die Videokamera (7) abgetastet werden kann.

2. Teilnehmergerat nach Anspruch 1,
dadurch gekennzeichnet, daß die Abtastebene eine im Reflexions- oder Transmissionsbereich des achromatischen Lichtteilers (5) angeordnete Fläche ist und daß der Tiefenschärfenbereich der Videokamera (7) auf diese Fläche einstellbar ist.

3. Teilnehmergerät nach Anspruch 2,
dadurch gekennzeichnet, daß die Fläche das Sichtfenster (4) ist und daß eine Vorrichtung zum Abdecken (Klappe 9) des Sichtfensters (4) vorgesehen ist.

4. Teilnehmergerät nach Anspruch 3,
dadurch gekennzeichnet, daß die Vorrichtung zum Abdecken (Klappe 9) an der Innenseite mattschwarz ist und mit einer den maximalen Abtastbereich angebenden Markierung versehen ist.

5. Teilnehmergerät nach Anspruch 2,
dadurch gekennzeichnet, daß die Fläche die gegenüber der der Kamera (7) abgewandten Seite des Lichtteilers (5) angeordnete Gehäusefläche ist und durchsichtig ist.

6. Teilnehmergerät nach Anspruch 5 mit unterhalb der Bildwiedergabeeinrichtung angeordneten Videokamera, dadurch gekennzeichnet, daß die durchsichtige Fläche eine in die Deckfläche des Gehäuses (1) eingelassene Glasplatte (8) ist, daß die Platte (8) und das Sichtfenster (4) etwa gleiche Abmessungen haben und mit einer Längsseite parallel zueinander verlaufen und daß zwischen der Glasplatte (8) und dem Sichtfenster (4) eine Abdeckklappe (9) schwenkbar gelagert ist.

7. Teilnehmergerät nach Anspruch 6,
dadurch gekennzeichnet, daß die Abdeckklappe (9) auf beiden Seiten mattschwarz ist.

8. Teilnehmergerät nach Anspruch 5 mit oberhalb der Bildwiedergabeeinrichtung angeordneten Videokamera, dadurch gekennzeichnet, daß die durchsichtige Fläche eine in die Bodenfläche des Gehäuses (1) eingelassene Glasplatte (10) ist, daß die Platte (10) etwa gleiche Abmessungen wie das Sichtfenster (4) hat, daß unterhalb der Glasplatte (10) eine Auflage (12) für den abzutastenden Gegenstand (13,14) vorgesehen ist und daß eine Abdeckplatte (11) vorhanden ist, die ein wahlweises Abdecken des Sichtfensters (4) und der Glasplatte (10) ermöglicht.

9. Teilnehmergerät nach einem der vorhergehenden Ansprüche,
dadurch gekennzeichnet, daß ein elektrischer Zwischenspeicher zur Aufnahme der Bildsignale der Videokamera (7) vorgesehen ist, daß der Speicher bildzeilenweise organisiert ist und daß die Bildsignale zur Weiterverarbeitung wahlweise bildzeilenweise in der Reihenfolge der Einspeicherung oder in umgekehrter Reihenfolge auslesbar sind.

## Claims

1. Subscriber device for video telephony, in which an image reproduction device, an achromatic light divider obliquely positioned between the screen of the reproduction device and a viewing window, and a video camera, are arranged within a housing, and by means of which a two- or three-dimensional article can be scanned,
**characterized in that**
for the scanning of an article (document 13 [or] object 14), the image reproduction device is brightened for the purpose of illuminating the article*1 and the article (13, 14) is arranged in such a way that, on the one hand, it is illuminated by the light radiated from the screen (3) and, on the other, can be scanned by the video camera (7).

2. Subscriber device as in claim 1,
characterized in that the scanning plane is a surface lying within the reflecting or transmitting area of the achromatic light splitter (5), and that the depth of focus of the video camera (7) can be adjusted to this plane.

3. Subscriber device as in claim 2,
characterized in that the plane is the viewing window (4) and an arrangement (flap 9) is provided for covering the viewing window (4).

4. Subscriber device as in claim 3,
characterized in that the covering arrangement (flap 9) is matt black on the inner side and is provided with markings indicating the maximum scanning area.

5. Subscriber device as in claim 2,
characterized in that the plane is the housing surface positioned opposite that side of the light splitter (5) which is turned away from the camera (7), and is transparent.

6. Subscriber device as in claim 5, with a video camera positioned below the image reproduction device, characterized in that the transparent surface is a glass plate (8) let into the covering surface of the housing (1), that the plate (8) and the viewing window (4) have approximately the same dimensions and run parallel to each other along a longitudinal side, and that a covering flap (9) is swivel-mounted between the glass plate (8) and the viewing window (4).

7. Subscriber device as in claim 6,
characterized in that the covering flap (9) is matt black on both sides.

8. Subscriber device as in claim 5, with a video camera positioned above the image reproduction device, characterized in that the transparent surface is a glass plate (10) let into the bottom surface of the housing (1), that the plate (10) has approximately the same dimensions as the viewing window (4), that a support (12) for the article to be scanned (13, 14) is provided below the glass plate (10), and that a covering plate (11) is present which permits the optional covering of the viewing window (4) and the glass plate (10).

9. Subscriber device as in one of the foregoing claims,
characterized in that an electrical intermediate memory is provided for recording the image signals from the video camera (7), that the memory is organized into picture lines, and that the image signals can optionally be read out for further processing in the form of scanning lines, either in the order in which they were stored or in reverse order.

## Revendications

1. Appareil d'abonné pour visiophone dans le cas duquel, dans une carrosserie d'un dispositif de reproduction de l'image, sont disposés un diviseur achromatique de lumière disposé obliquement entre l'écran du dispositif de reproduction de l'image et une fenêtre de vue, ainsi qu'une caméra vidéo, et avec lequel on peut balayer au choix un objet bidimensionnel ou tridemensionnel,
appareil caractérisé,
par le fait que, pour le balayage d'un objet (document 13, objet 14), dans le but d'éclairer l'objet, la luminance maximale du dispositif de reproduction de l'image est commandée et l'objet (13,14) est disposé de façon que d'une part il soit éclairé par la lumière rayonnée par l'écran (3) et que d'autre part il puisse être exploré par la caméra vidéo (7).

2. Appareil d'abonné selon la revendication 1,
caractérisé par le fait que le plan de balayage est une surface disposée dans la zone de réflexion ou de transmission du diviseur achromatique de lumière (5) et par le fait que la plage de profondeur de champ de la caméra vidéo (7) peut se régler sur cette surface.

3. Appareil d'abonné selon la revendication 2,
caractérisé par le fait que la surface est la fenêtre de vue (4) et par le fait qu'est prévu un dispositif pour recouvrir (volet 9) la fenêtre de vue (4).

4. Appareil d'abonné selon la revendication 3,
caractérisé par le fait que le dispositif prévu pour recouvrir (volet 9) est noir mat sur sa face intérieure et qu'il comporte un repère indiquant la zone maximale de balayage.

5. Appareil d'abonné selon la revendication 2,
caractérisé par le fait que la surface est la surface de la carrosserie disposée en face de la face du diviseur de lumière (5) située du côté opposé à la caméra (7) et qu'elle est transparente.

6. Appareil d'abonné selon la revendication 5, comportant une caméra vidéo disposée en dessous du dispositif de reproduction de l'image,
caractérisé par le fait que la surface transparente est une plaque de verre (8) insérée dans la surface de toit de la carosserie (1), par le fait que la plaque (8) et la fenêtre de vue (4) ont à peu près les mêmes dimensions et sont orientées parallèlement l'une à l'autre par un côté longitudinal et par le fait qu'entre la plaque de verre (8 et la fenêtre de vue (4), un volet de recouvrement (9) est placé avec liberté de pivotement.

7. Appareil d'abonné selon la revendication 6,
caractérisé par le fait que le volet de recouvrement (9) est noir mat sur les deux faces.

8. Appareil d'abonné selon la revendication 5, comportant une caméra vidéo disposée au-dessus du dispositif de reproduction de l'image,
caractérisé par le fait que la surface transparente est une plaque de verre (10) insérée dans la surface de plancher de la carrosserie (1), par le fait que la plaque (10) a à peu près les mêmes dimensions que la fenêtre de vue (4), par le fait qu'en dessous de la plaque de verre (10) est prévue un support (12) pour l'objet (13,14) à balayer et par le fait qu'il existe une plaque de recouvrement (11) qui permet de recouvrir au choix la fenêtre de vue (4) et la plaque de verre (10).

9. Appareil d'abonné selon l'une des revendications précédentes,
caractérisé par le fait qu'une mémoire électrique intermédiaire est prévue pour recevoir les signaux vidéo de la caméra vidéo (7), par le fait que la mémoire est organisée par ligne de l'image et par le fait que, pour la poursuite du traitement, les signaux vidéo peuvent se lire au choix par ligne de l'image dans l'ordre de mémorisation ou dans l'ordre inverse.
